# EUROPEAN PATENT APPLICATION

(11) **EP 4 269 214 A1**
(43) Date of publication of application: **01.11.2023**
(21) Application number: 22170308.5
(22) Date of filing: 27.04.2022
(51) Int. Cl.: B62D 15/02

(54) **METHOD FOR PROTECTING A WHEEL RIM OF A VEHICLE, DATA PROCESSING DEVICE, SYSTEM FOR PROTECTING A WHEEL RIM OF A VEHICLE, COMPUTER PROGRAM, AND COMPUTER-READABLE STORAGE MEDIUM**

(71) Applicant: Volvo Car Corporation, 40531 Göteborg (SE)
(72) Inventor: DE PAUL GBEHI, Vincent, 40531 Göteborg (SE); JOHANSSON, Conny, 40531 Göteborg (SE)
(74) Representative: Maiwald GmbH

(57) **Abstract**

The disclosure relates to a method for protecting a wheel rim (20) of a vehicle (10) from being damaged by a roadway boundary (24). The method comprises receiving a detection information describing a roadway boundary (24) in the vicinity of the vehicle (10). Moreover, the method comprises determining at least one collision parameter describing a risk of collision between the roadway boundary (24) and the wheel rim (20) based on the detection information. Furthermore, the method comprises triggering a steering maneuver of the vehicle (10), if the determined at least one collision parameter is inferior to a pre-defined upper threshold or exceeds a pre-defined lower threshold. Moreover, the disclosure is directed to a data processing device (38) comprising means for carrying out the method and a system (22) for protecting a wheel rim (20) of a vehicle (10) from being damaged by a roadway boundary (24). Additionally, a computer program and a computer-readable storage medium are presented.

## Description

The present disclosure relates to a method for protecting a wheel rim of a vehicle from being damaged by a roadway boundary.

Moreover, the present disclosure is directed to a data processing device comprising means for carrying out such a method.

Furthermore, the present disclosure relates to a system for protecting a wheel rim of a vehicle from being damaged by a roadway boundary.

Additionally, the present disclosure is directed to a computer program and a computer-readable storage medium.

Many vehicles use rather expensive wheel rims which additionally are easily damageable if they contact a roadway boundary such as a curb.

This is especially relevant when maneuvering the vehicle in a restricted space such as a parking space being delimited by roadway boundaries or when parallel parking the vehicle in a comparatively narrow road.

Preventing damage from the wheel rims is difficult, since a driver of the vehicle usually is not able to see the region where a contact between a wheel rim and the roadway boundary potentially occurs. Thus, the driver needs to be very cautious and needs to maneuver the vehicle based on an estimation of the location of the roadway boundary.

Such an estimation may be imprecise such that an elevated risk of damaging at least one wheel rim pertains. At the same time, if the driver is very cautions, the available road space may only be used in an inefficient manner. In other words, the driver may keep a rather large safety distance from the roadway boundary. Consequently, road space may be unnecessarily blocked and the vehicle may hinder other vehicles.

Thus, it is an objective of the present disclosure to provide a means to protect the SE:TOP
wheel rims from being damaged and at the same time allow the road space to be used efficiently.

The problem is at least partially solved or alleviated by the subject matter of the independent claims of the present disclosure, wherein further examples are incorporated in the dependent claims.

According to a first aspect, there is provided a method for protecting a wheel rim of a vehicle from being damaged by a roadway boundary. The method comprises:
- receiving a detection information describing a roadway boundary in the vicinity of the vehicle,
- determining at least one collision parameter describing a risk of collision between the roadway boundary and the wheel rim based on the detection information, and
- triggering a steering maneuver of the vehicle, if the determined at least one collision parameter is inferior to a pre-defined lower threshold or exceeds a pre-defined upper threshold.

Receiving the detection information leads to a situation in which at least one of a position parameter and a size parameter describing the roadway boundary is known. Based thereon, the risk of collision can be assessed with high precision and reliability. By triggering a steering maneuver of the vehicle, a collision between the wheel rim and the roadway boundary can be avoided. The steering maneuver may also be designated as a collision avoidance maneuver. At the same time, due to the fact that the steering maneuver is based on the received detection information, the road space can still be used in an efficient manner. This means that large safety distances or safety zones are not necessary. The pre-defined lower threshold and the pre-defined upper threshold are alternatives. The appropriate alternative is chosen as a function of the collision parameter. In a case, in which the collision parameter describes the risk of collision by a parameter which increases if the risk of collision increases, the pre-defined upper threshold is used. In a case, in which the collision parameter describes the risk of collision by a parameter which decreases if the risk of collision increases, the pre-defined lower threshold is used. In a case in which none of the conditions in connection with the pre-defined lower threshold or the pre-defined upper threshold is met, no steering maneuver is triggered.

Using the method also renders mechanical rim protections unnecessary. Such mechanical rim protections may be provided on the tires. The aerodynamic drag of the tires is reduced by eliminating the mechanical rim protections.

According to an example, triggering the steering maneuver may comprise using at least one of a vehicle speed and a steering angle as an input parameter in addition to the detection information which for example describes a position of the roadway boundary. Based thereon, at least one of an amended steering angle and an amended vehicle speed may be determined such that a collision between the wheel rim and the roadway boundary is avoided. Of course, the amended steering angle and the amended vehicle speed may be provided as a function over time or as a function over a travelling distance along a trajectory.

In an example, the method according to the present disclosure may be performed automatically. Thus, a driver of the vehicle does not actively perform the method. This especially applies to triggering the steering maneuver. Consequently, a collision between a wheel rim and a roadway boundary may be avoided with high reliability.

In an example, the detection information comprises a two-dimensional or three-dimensional scan of the vicinity of the vehicle. This means that the vicinity of the vehicle is sweeped line-by-line or along a grid pattern. A simple optical image is not a scan. Thus, the roadway boundary may be described with high precision and high reliability by the detection information. This allows to trigger the steering maneuver in a precise manner.

In an example, the scan is a lidar scan. Such a scan may comprise a high resolution independent from the fact whether the scan is a 2D scan or a 3D scan. Moreover, since the lidar technology is comparatively reliable in environments with low contrast, e.g. snowy or rainy environments, dark or foggy environments, the quality and precision of a lidar scan is independent from weather or lighting conditions. Thus also in these conditions, the steering maneuver may be triggered with high precision and reliability.

In another example, the detection information may be a prediction information. A prediction information is a detection information which is not generated by a sensor unit detecting something. Rather, a prediction information is an estimation of a detection information provided by a sensor unit. Thus, a prediction information can be used as a detection information if a corresponding sensor unit is at least temporarily unavailable. The prediction information may be generated by detection information having been generated by the sensor unit in the past. Alternatively or additionally, other information sources may be used for generating the prediction information.

According to an example, the scan may be supplemented by an additional radar scan or an additional ultrasonic scan. It is also possible to supplement the scan by an optical image. Thus, the detection information may be provided by at least two different sensors. This further enhances the precision and robustness of the detection information. In such a case, the sensor data being provided by different sensors is fused to create a single environmental map showing the roadway boundary. Such a map is essentially a coordinate system where some areas are occupied by objects and other areas are free, i.e. representing a driveable space.

In an example, the at least one collision parameter is determined by performing at least one of a feature extraction technique and an object recognition technique on the detection information. In doing so, the roadway boundary may be detected and described both as such and with respect to the vehicle. Feature extraction techniques and object recognition techniques provide an accurate and quick analysis of the received detection information. Consequently, the steering maneuver can be triggered accurately and quickly.

In an example, the collision parameter is a minimal distance between the wheel and the roadway boundary. In simplified words, the collision parameter describes how close a location of the wheel is with respect to the roadway boundary. The closer the wheel is located with respect to the roadway boundary, the higher the risk of collision. Put otherwise, the smaller the minimal distance between the wheel and the roadway boundary, the higher the risk of collision. The minimal distance may be easily and quickly determined based on the received detection information. At the same time, the minimal distance describes the risk of collision in an adequate and simple manner.

In an example, the pre-defined lower threshold is a pre-defined distance between the roadway boundary and the wheel. Thus, the steering activity is triggered if the wheel is too close to roadway boundary. The corresponding determination if the collision parameter, i.e. the current minimal distance between the roadway boundary and the wheel is lower than the pre-defined lower threshold, may be performed in a computationally efficient and reliable manner. Thus, a collision between the wheel rim and the roadway boundary may be reliably avoided. At the same time, the lower threshold, i.e. the pre-defined distance between the roadway boundary and the wheel may be chosen small enough to guarantee efficient use of the available road space.

In an example, the collision parameter is a difference between a height of a tire mounted on the wheel rim and a height of the roadway boundary. It is obvious that the height of the tire needs to be known in this context. The height is understood as a radial height of the tire. Thus, this collision parameter incorporates the fact that in a case in which the height of the tire is sufficiently bigger than the height of the roadway boundary, a collision between the wheel and the roadway boundary does not lead to damaging the wheel rim since only the tire will contact the roadway boundary. In such a case, triggering a steering maneuver may not be necessary. Otherwise, i.e. if the height of the tire is smaller than the height of the roadway boundary or if the height of the tire is the same as the height of the roadway boundary or if the height of the tire is insufficiently bigger than the height of the roadway boundary, there is a risk of damaging the wheel rim which needs to be avoided by triggering a steering maneuver.

In an example, the pre-defined lower threshold is a pre-defined height difference between the roadway boundary and the tire mounted on the wheel rim. This means that a steering activity is triggered, either if the roadway boundary is higher than the radial height of the tire or if the roadway boundary is of the same height or higher than the radial height of the tire with the difference between the height of the tire and the roadway boundary being so small that a collision between the wheel rim and the roadway boundary cannot be reliably excluded. Thus, collisions between the wheel rim and the roadway boundary may be reliably avoided.

It is noted that, according to an example, both collision parameters which have been described above may be used in combination.

In an example, the method further comprises triggering a deceleration activity of the vehicle. This means that a speed of the vehicle is reduced. This may be achieved by actuating the brakes of the vehicle. In doing so, the time for triggering the steering maneuver is increased. Consequently, a collision between the wheel rim and the roadway boundary can be reliably avoided.

In an example, the method further comprises triggering a notification for a driver of the vehicle. Thus, the driver is aware of the fact that the method is performed. Consequently, the driver is not surprised if the triggered steering maneuver is performed in an automatic manner. The notification may for example comprise a warning. The notification may be at least one of visual, audible and haptic.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing device comprising means for carrying out the method of the present disclosure. Using the data processing device, a collision between a wheel rim and a roadway boundary can be efficiently and reliably avoided. Thus, a wheel rim of a vehicle can be reliably protected from being damaged by a roadway boundary. At the same time, available road space can be efficiently used.

According to a third aspect, there is provided a system for protecting a wheel rim of a vehicle from being damaged by a roadway boundary. The system comprises a sensor unit configured to detect a roadway boundary in the vicinity of the vehicle and to provide a detection information. Furthermore, the system comprises a data processing device according to the present disclosure. Moreover, the system comprises a communication interface configured to provide a trigger signal to a steering unit of the vehicle. The sensor unit and the communication interface are communicatively connected to the data processing device. The sensor unit may be configured to detect a roadway boundary which is only partly or not at all detectable by a human driver. Thus, as compared to a detection by a human driver, the roadway boundary may be detected with high precision and high reliability. As a consequence therof, a collision between a wheel rim and a roadway boundary can be efficiently and reliably avoided. Thus, a wheel rim of a vehicle can be reliably protected from being damaged by a roadway boundary. At the same time, available road space can be efficiently used.

According to an example, the system is operated automatically, i.e. without an intervention of a human driver.

In an example, the sensor unit is configured to predict a detection information. Thus, the sensor unit is able to provide a detection information without effectively detecting something. Using this functionality, the system stays operational in a case in which the detection functionality of the sensor unit is at least temporarily unavailable. The prediction can for example rely on detection results from the past.

In an example, the sensor unit comprises a lidar unit. Thus, a roadway boundary in the vicinity of the vehicle may be detected with high precision and reliability. As far as the advantages of the lidar technology over other sensor technologies are concerned, reference is made to the above explanations.

According to an example, the system comprises a supplementary sensor unit. The supplementary sensor unit may comprise at least one of a radar unit, an ultrasonic unit and an optical camera unit. Thus, the detection information may be provided by at least two different sensor units, i.e. the sensor unit and the supplementary sensor unit. This further enhances the precision and robustness of the detection information. In such a case, the sensor data being provided by different sensor units is fused to create a single environmental map showing the roadway boundary. Such a map is essentially a coordinate system where some areas are occupied by objects and other areas are free, i.e. representing a driveable space.

In an example, the sensor unit is located in a side mirror of the vehicle or on a roof of the vehicle. This has several advantages. First of all, the relevant environment potentially comprising a roadway boundary may be reliably detected since a sensor unit being located in a side mirror or on a roof may have an unobstructed line of sight to a front wheel and a rear wheel of the vehicle. Additionally, the sensor unit is sufficiently close to the relevant environment, but at the same time protected from negative influences of the environment, e.g. water, snow and collisions.

According to an example, in which only one sensor unit is provided, the sensor unit may be installed in the side mirror of the passenger side of the vehicle. Alternatively, the sensor unit can be installed on a passenger side of the roof of the vehicle. It is more difficult for a driver to estimate a location of a roadway boundary on the passenger side than on the driver side. Consequently, such a sensor unit remarkably improves the protection of the wheel rims. This also applies in examples in which only one supplementary sensor unit is provided.

According to another example, the system comprises two sensor units. One sensor unit is located in the side mirror or on a roof portion on the driver side and one sensor unit is located in the side mirror or on a roof portion on the passenger side. This leads to a reliable protection of the wheel rims.

It is noted that in a case in which more than one sensor unit is provided, it is also possible to locate one of the sensor units in a side mirror and another one of the sensor units on the roof.

According to a fourth aspect, there is provided a computer program comprising instructions which, when the program is executed by a computer, cause the computer to carry out the method of the present disclosure. Using such a computer program, a wheel rim of a vehicle can be reliably protected from being damaged by a roadway boundary.

According to a fifth aspect, there is provided a computer-readable storage medium comprising instructions which, when executed by a computer, cause the computer to carry out the method of the present disclosure. Using such a computer-readable storage medium, a wheel rim of a vehicle can be reliably protected from being damaged by a roadway boundary.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a vehicle comprising a system according to the present disclosure, wherein the system comprises a data processing device according to the present disclosure with a computer-readable storage medium according to the present disclosure and a computer program according to the present disclosure being configured for performing a method according to the present disclosure,
- Figure 2: shows a detail II of Figure 1,
- Figure 3: shows the system of Figure 1 in more detail, and
- Figure 4: illustrates the method of Figure 1 in more detail.

The Figures are merely schematic representations and serve only to illustrate examples of the disclosure. Identical or equivalent elements are in principle provided with the same reference signs.

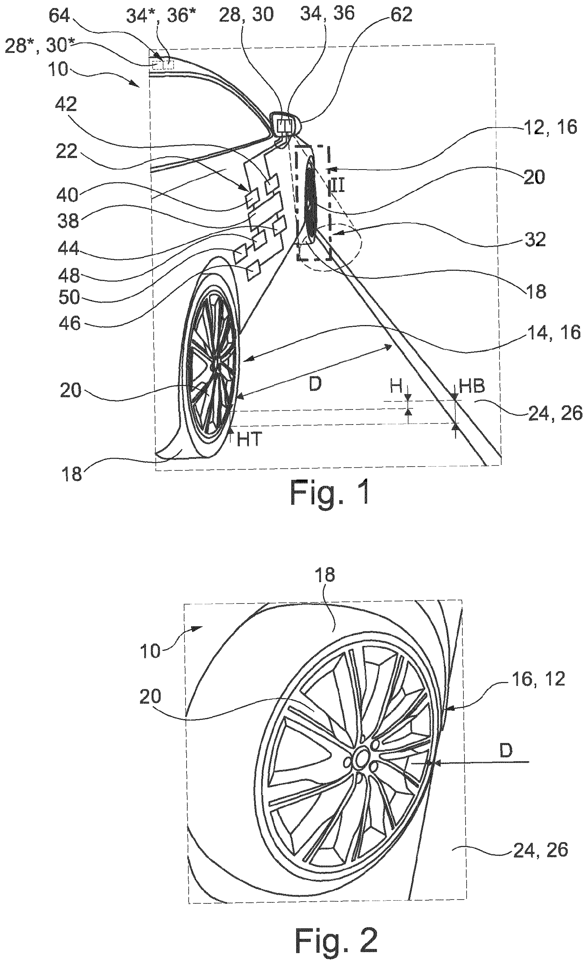

Figure 1 shows a vehicle 10.

A front wheel 12 and a rear wheel 14 of the vehicle are visible in Figure 1.

For the ease of explanation, the front wheel 12 and a rear wheel 14 will be simply designated as a wheel 16 respectively.

Each wheel 16 comprises a tire 18 and a wheel rim 20.

The vehicle 10 is equipped with a system 22 for protecting the wheel rim 20 from being damaged by a roadway boundary 24.

A corresponding situation to be avoided can best be seen from Figure 2. In this example, the roadway boundary 24 is a curb 26.

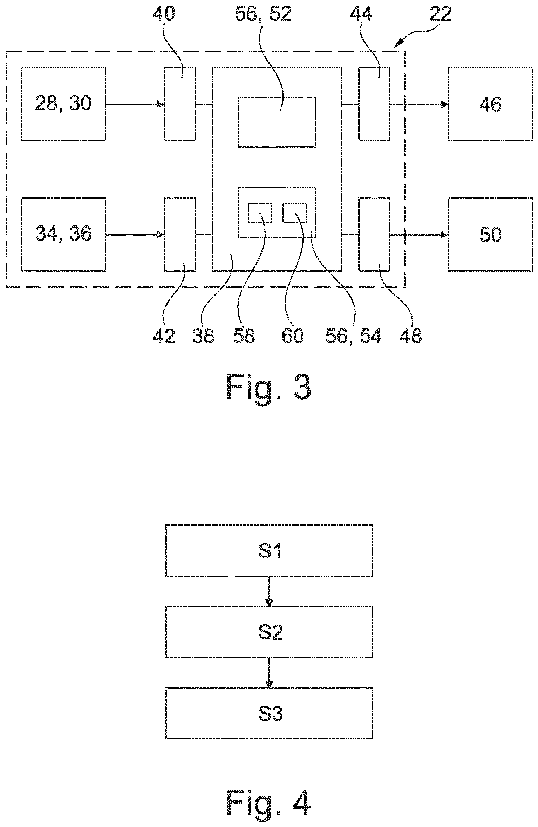

The system 22 is partly illustrated in Figure 1 and fully shown in Figure 3.

The system 22 comprises a sensor unit 28 which is configured to detect the roadway boundary 24 in the vicinity of the vehicle 10.

In the example shown in the Figures, the sensor unit 28 is a lidar unit 30.

A corresponding field 32 of detection is illustrated in Figure 1 and designated with reference sign 32.

The system 22 also comprises a supplementary sensor unit 34 which is configured to detect the roadway boundary 24 in the vicinity of the vehicle 10.

In the example shown in the Figures, the supplementary sensor unit 34 is an ultrasound unit 36.

A field of detection of the ultrasound unit 36 is substantially identical to the field 32 of detection of the lidar unit 30. Consequently, both fields of detection are designated with reference sign 32.

The system 22 further comprises a data processing device 38.

The sensor unit 28 is communicatively connected to the data processing device 38 via a first communication interface 40.

The sensor unit 28 is configured to provide a detection information, i.e. a detection result of the lidar unit 30, to the data processing device 38 via the first communication interface 40.

The supplementary sensor unit 34 is communicatively connected to the data processing device 38 via a second communication interface 42.

The supplementary sensor unit 34 is configured to provide a detection information, i.e. a detection result of the ultrasound unit 36, to the data processing device 38 via the second communication interface 42.

The system further comprises a third communication interface 44. Via the third communication interface 44, the data processing device 38 is communicatively connected to a steering unit 46.

The steering unit 46 is configured to steer the vehicle 10.

The third communication interface 44 is configured to provide a trigger signal to the steering unit 46.

Additionally, the system 22 comprises a fourth communication interface 48.

A longitudinal travel control unit 50 is communicatively connected to the data processing device 38 via the fourth communication interface 48.

The longitudinal travel control unit 50 is configured to control a longitudinal acceleration and deceleration of the vehicle by controlling corresponding actuators, e.g. the brake actuators and a motor control unit of the vehicle 10.

The fourth communication interface 48 is configured to provide a trigger signal to the longitudinal travel control unit 50.

The data processing device 38 comprises a data processing unit 52 and a data storage unit 54.

The data processing unit 52 and the data storage unit 54 are means 56 for carrying out a method for protecting the wheel rim 20 of the vehicle 10 from being damaged by the roadway boundary 24.

To this end, the data storage unit 54 comprises a computer-readable storage medium 58 which comprises instructions which, when executed by the data processing unit 52 or more generally a computer, cause the data processing unit 52 to carry out the method.

Moreover, on the data storage unit, a computer program 60 is provided. The computer program 60 comprises instructions which, when the computer program 60 is executed by the data processing unit 52 or more generally a computer, cause the data processing unit 52 to carry out the method.

The method is illustrated in detail in Figure 4.

In a first step S1, a detection information describing the roadway boundary 24 in the vicinity of the vehicle 10 is received.

The detection information comprises both the detection information provided by the sensor unit 28 and the supplementary sensor unit 34.

In the present example, the detection information provided by the sensor unit 28 comprises a three-dimensional lidar scan of the vicinity of the vehicle 10.

The detection information provided by the supplementary sensor unit 34 comprises a three-dimensional ultrasonic scan of the vicinity of the vehicle 10.

In a second step S2, using the data processing device 38, two collision parameters are determined based on the detection information, i.e. on the lidar scan and the ultrasonic scan.

The collision parameters both describe a risk of collision between the roadway boundary 24 and the wheel rim 20.

In more detail, a first collision parameter is a minimal distance D between the wheel 16 and the roadway boundary 24. Even though in the example shown in Figure 1 the field 32 of detection only comprises the front wheel 12, the minimal distance D is illustrated for the rear wheel 14 for the ease of explanation. Considering Figure 1 and 2 together, it is obvious that the minimal distance D of the front wheel 12 from the roadway boundary 24 is zero.

A second collision parameter is a difference H between a height HT of the tire 18 mounted on the wheel rim 20 and a height HB of the roadway boundary 24.

In this context, the height HT of the tire 18 is known and provided by the data storage unit 54.

Thus, only the height HB of the roadway boundary 24 needs to be determined based on the detection results.

Since in the present example, both the sensor unit 28 and the supplementary sensor unit 34 are used, a sensor fusion technique is applied. In doing so, a single map is created which shows the environment of the vehicle 10, more precisely the field 32 of detection including the roadway boundary 24 and the wheel 16.

Based on this map, a feature extraction technique and an object recognition technique is used to identify the roadway boundary 24 and the wheel 16 in the detection information.

Subsequently, the height HB of the roadway boundary 24 and the minimal distance D of the wheel 12 from the roadway boundary 24 can be extracted from the detection information.

Moreover, on the data storage unit 54, a pre-defined lower threshold being a pre-defined distance between the roadway boundary 24 and the wheel 16 is provided.

Additionally, on the data storage unit 54, a pre-defined lower threshold being a pre-defined height difference between the roadway boundary 24 and the tire 18 mounted on the wheel rim 20 is provided.

Subsequently, in a third step S3 of the method, a steering maneuver of the vehicle is triggered, if two conditions are met.

The first condition is that the minimal distance D is inferior to the pre-defined distance between the roadway boundary 24 and the wheel 16. In simplified words, the wheel 16 is so close to the roadway boundary 24 that there is a risk of damaging the wheel rim 20.

The second condition is that the difference H between the height HT of the tire 18 mounted on the wheel rim 20 and a height HB of the roadway boundary 24 is inferior to the pre-defined height difference between the roadway boundary 24 and the tire 18 mounted on the wheel rim 20.

In this context, the height HB of the roadway boundary 24 is subtracted from the height HT of the tire 18. If the result of this subtraction is negative, i.e. if the height HB of the roadway boundary 24 is bigger than the height HT of the tire 18, the roadway boundary 24 may damage the wheel rim 20. In a case in which the result of the subtraction is positive or zero and at the same time inferior to the pre-defined height difference, the height HT of the tire 18 is bigger than the height HB of the roadway boundary 24, however, the difference H between these heights is so small that a risk of collision between the wheel rim 20 and the roadway boundary pertains.

In a case in which the height HT of the tire 18 is substantially bigger than the height HB of the roadway boundary 24 a risk of damaging the wheel rim 20 can be excluded since the roadway boundary 24 will only be able to contact the tire 18 but not the wheel rim 20.

The steering maneuver is triggered via the third communication interface 44.

Depending on the travelling direction, the steering maneuver either turns the respective wheel 16 towards a direction being substantially parallel to the roadway boundary 24 or being substantially perpendicular to the roadway boundary 24. In both cases, the wheel 16 is directed away from the roadway boundary 24.

When performing the steering maneuver, a steering rate may be limited. This leads to a smooth performance of the steering maneuver.

Moreover, if the two above conditions are met, a deceleration activity of the vehicle 10 is triggered via the fourth communication interface 48. Thus, the vehicle 10 is slowed down.

Additionally, a notification for a driver of the vehicle 10 is triggered. The notification is for example a sound signal being delivered to the driver.

As far as the installation of the system 22 within the vehicle 10 is concerned, it is important that the sensor unit 28 and the supplementary sensor unit 34 are located in a side mirror 62 of the vehicle 10. In this case, an appropriate field 32 of detection can be guaranteed.

The remaining components of the system 22 may be located in a protected space within the vehicle.

Alternatively to locating the sensor unit 28 and the sensor unit 34 in the side mirror 62, the sensor unit 28 and the sensor unit 34 can be located on a roof 64 of the vehicle. This alternative location is indicated in Figure 1 by a dotted line. The corresponding reference signs are marked with an asterisk. The connections of the sensor unit 28^{∗} and the supplementary sensor unit 34^{∗} to the first communication interface 40 and the second communication interface 42 is omitted in the Figure for better intelligibility.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: front wheel
- 14: rear wheel
- 16: wheel
- 18: tire
- 20: wheel rim
- 22: system for protecting a wheel rim of a vehicle from being damaged by a roadway boundary
- 24: roadway boundary
- 26: curb
- 28: sensor unit
- 28^{∗}: sensor unit
- 30: lidar unit
- 30^{∗}: lidar unit
- 32: field of detection
- 34: supplementary sensor unit
- 34^{∗}: supplementary sensor unit
- 36: ultrasound unit
- 36^{∗}: ultrasound unit
- 38: data processing device
- 40: first communication interface
- 42: second communication interface
- 44: third communication interface
- 46: steering unit
- 48: fourth communication interface
- 50: longitudinal travel control unit
- 52: data processing unit
- 54: data storage unit
- 56: means for carrying out a method for protecting a wheel rim of a vehicle from being damaged by a roadway boundary
- 58: computer-readable storage medium
- 60: computer program
- 62: side mirror
- 64: roof

- D: minimal distance between a wheel and a roadway boundary
- H: difference between a height of a tire and a height of a roadway boundary
- HT: height of a tire
- HB: height of a roadway boundary

## Claims

1. A method for protecting a wheel rim (20) of a vehicle (10) from being damaged by a roadway boundary (24), comprising:
- receiving a detection information describing a roadway boundary (24) in the vicinity of the vehicle (10) (SI),
- determining at least one collision parameter describing a risk of collision between the roadway boundary (24) and the wheel rim (20) based on the detection information (S2), and
- triggering a steering maneuver of the vehicle (10), if the determined at least one collision parameter is inferior to a pre-defined lower threshold or exceeds a pre-defined upper threshold.

2. The method according to claim 1, wherein the detection information comprises a two-dimensional or three-dimensional scan of the vicinity of the vehicle (10).

3. The method according to claim 1 or 2, wherein the at least one collision parameter is determined by performing at least one of a feature extraction technique and an object recognition technique on the detection information.

4. The method according to any one of the preceding claims, wherein the collision parameter is a minimal distance (D) between the wheel (16) and the roadway boundary (24).

5. The method according to claim 4, wherein the pre-defined lower threshold is a pre-defined distance between the roadway boundary (24) and the wheel (16).

6. The method according to any of the preceding claims, wherein the collision parameter is a difference (H) between a height (HT) of a tire (18) mounted on the wheel rim (20) and a height (DB) of the roadway boundary (24).

7. The method according to claim 6, wherein the pre-defined lower threshold is a pre-defined height difference between the roadway boundary (24) and the tire (18) mounted on the wheel rim (20).

8. The method according to any one of the preceding claims, further comprising triggering a deceleration activity of the vehicle (10).

9. The method according to any one of the preceding claims, further comprising triggering a notification for a driver of the vehicle (10).

10. A data processing device (38) comprising means (56) for carrying out the method of the preceding claims.

11. A System (22) for protecting a wheel rim (20) of a vehicle (10) from being damaged by a roadway boundary (24), comprising
a sensor unit (28) configured to detect a roadway boundary (24) in the vicinity of the vehicle (10) and to provide a detection information,
a data processing device (38) according to claim 10, and
a communication interface (44) configured to provide a trigger signal to a steering unit (46) of the vehicle (10),
wherein the sensor unit (28) and the communication interface (44) are communicatively connected to the data processing device (38).

12. The system (22) according to claim 11, wherein the sensor unit (28) comprises a lidar unit (30).

13. The system (22) according to claim 11 or 12, wherein the sensor unit (28) is located in a side mirror (62) of the vehicle (10) or on a roof (64) of the vehicle (10).

14. A computer program (60) comprising instructions which, when the computer program (60) is executed by a computer, cause the computer to carry out the method of claims 1 to 9.

15. A computer-readable storage medium (58) comprising instructions which, when executed by a computer, cause the computer to carry out the method of claims 1 to 9.

## Amended claims

### Amended claims in accordance with Rule 137(2) EPC.

1. A method for protecting a wheel rim (20) of a vehicle (10) from being damaged by a roadway boundary (24), comprising:
- receiving a detection information describing a roadway boundary (24) in the vicinity of the vehicle (10) (S1),
- determining at least one collision parameter describing a risk of collision between the roadway boundary (24) and the wheel rim (20) based on the detection information (S2), wherein the at least one collision parameter is a difference (H) between a height (HT) of a tire (18) mounted on the wheel rim (20) and a height (HB) of the roadway boundary (24) and
- triggering a steering maneuver of the vehicle (10), if the determined at least one collision parameter is inferior to a pre-defined lower threshold or exceeds a pre-defined upper threshold.

2. The method according to claim 1, wherein the detection information comprises a two-dimensional or three-dimensional scan of the vicinity of the vehicle (10).

3. The method according to claim 1 or 2, wherein the at least one collision parameter is determined by performing at least one of a feature extraction technique and an object recognition technique on the detection information.

4. The method according to any one of the preceding claims, wherein the collision parameter is a minimal distance (D) between the wheel (16) and the roadway boundary (24).

5. The method according to claim 4, wherein the pre-defined lower threshold is a pre-defined distance between the roadway boundary (24) and the wheel (16).

6. The method according to any one of the preceding claims, wherein the pre-defined lower threshold is a pre-defined height difference between the roadway boundary (24) and the tire (18) mounted on the wheel rim (20).

7. The method according to any one of the preceding claims, further comprising triggering a deceleration activity of the vehicle (10).

8. The method according to any one of the preceding claims, further comprising triggering a notification for a driver of the vehicle (10).

9. A data processing device (38) comprising means (56) for carrying out the method of the preceding claims.

10. A System (22) for protecting a wheel rim (20) of a vehicle (10) from being damaged by a roadway boundary (24), comprising
a sensor unit (28) configured to detect a roadway boundary (24) in the vicinity of the vehicle (10) and to provide a detection information,
a data processing device (38) according to claim 9, and
a communication interface (44) configured to provide a trigger signal to a steering unit (46) of the vehicle (10),
wherein the sensor unit (28) and the communication interface (44) are communicatively connected to the data processing device (38).

11. The system (22) according to claim 10, wherein the sensor unit (28) comprises a lidar unit (30).

12. The system (22) according to claim 10 or 11, wherein the sensor unit (28) is located in a side mirror (62) of the vehicle (10) or on a roof (64) of the vehicle (10).

13. A computer program (60) comprising instructions which, when the computer program (60) is executed by a computer, cause the computer to carry out the method of claims 1 to 8.

14. A computer-readable storage medium (58) comprising instructions which, when executed by a computer, cause the computer to carry out the method of claims 1 to 8.
